Europäisches Patentamt

European Patent Office

Office européen des brevets

(19)

(11) EP 1 319 138 B1

(12) EUROPÄISCHE PATENTSCHRIFT

(45) Veröffentlichungstag und Bekanntmachung des Hinweises auf die Patenterteilung:
01.03.2006 Patentblatt 2006/09

(21) Anmeldenummer: 01978144.2

(22) Anmeldetag: 14.09.2001

(51) Int Cl.:
*F16D 48/06* (2006.01)

(86) Internationale Anmeldenummer:
PCT/DE2001/003548

(87) Internationale Veröffentlichungsnummer:
WO 2002/025130 (28.03.2002 Gazette 2002/12)

(54) **VERFAHREN ZUM STEUERN EINER AUTOMATISCHEN KRAFTFAHRZEUGKUPPLUNG**

METHOD FOR CONTROLLING AN AUTOMATIC MOTOR VEHICLE CLUTCH

PROCEDE DE COMMANDE D'UN EMBRAYAGE AUTOMATIQUE DE VEHICULE A MOTEUR

(84) Benannte Vertragsstaaten:
DE FR

(30) Priorität: 18.09.2000 DE 10046108

(43) Veröffentlichungstag der Anmeldung:
18.06.2003 Patentblatt 2003/25

(73) Patentinhaber: SIEMENS AKTIENGESELLSCHAFT
80333 München (DE)

(72) Erfinder:
• BAMBERGER, Joachim
82131 Stockdorf (DE)
• HORN, Joachim
80689 München (DE)
• MICHAU, Peter
93055 Regensburg (DE)
• NOCK, Ernst
88069 Tettnang (DE)

(56) Entgegenhaltungen:
EP-A- 1 058 019          DE-A- 19 504 847
DE-A- 19 826 747

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren nach dem Oberbegriff von Patentanspruch 1, wie es z. B. aus DE-A-19504847 bekannt ist. Eine solche Kraftfahrzeugkupplung weist ein Stellglied zum Betätigen der Kupplung und ein elektromagnetisch betätigtes Ventil auf, mit dessen Spulenstrom die Position der Kupplung festgelegt wird.

Neben den herkömmlichen durch den Fahrer direkt betätigten Kraftfahrzeugkupplungen werden in Kraftfahrzeugen zunehmend automatisch betätigte Kupplungen eingesetzt (siehe zum Beispiel DE 44 34 111 A1). Bei solchen Kupplungen treten aber Probleme auf, wenn sie ohne Kupplungslagesensor, zum Beispiel bei einem Ausfall des Sensors, gesteuert werden sollen. Da die Kupplung ein sicherheitskritisches Element in einem Kraftfahrzeug ist, muss ihre Funktion auch ohne Funktionsfähigkeit des Sensors ständig gewährleistet sein.

Ein elektronisches Betriebssteuersystem für einen Kraftfahrzeug-Antriebsstrang (DE 38 31 449 A1) enthält eine sogenannte Kupplungselektronik, von der ausgesagt wird, dass sie die Funktion der Kupplung nach einem festgelegten Programm abhängig von verschiedenen Mess- oder Zustandsmeldesignalen regelt und steuert. Maßnahmen für den Fall eines Sensorfehlers sind dabei nicht vorgesehen.

Der Erfindung liegt die Aufgabe zugrunde, ein Verfahren zum Steuern einer automatisch betätigten Kraftfahrzeugkupplung zu schaffen, deren Funktion jederzeit gesichert ist. Insbesondere dann, wenn ein Lagesensor der Kupplungsbetätigung ausfällt.

Die Aufgabe der Erfindung wird durch ein Verfahren nach Patentsanspruch 1 gelöst. Bei dem Verfahren wird anhand eines regeltechnischen Modells der zu steuernden Strecke ein inverses Streckenmodell erstellt, wird mit dem inversen Streckenmodell der Spulenstrom des Ventils gesteuert und wird bei an einem Anschlag anliegenden Kupplungsstellzylinder der Druck in diesem Zylinder aufgebaut und aus einem Drucksollwert ein Steuersignal für das Stellglied erzeugt.

Zweckmäßige Weiterbildungen der Erfindung sind in den Unteransprüchen niedergelegt.

Die Vorteile der Erfindung liegen insbesondere darin, dass sie eine einfache Realisierung eines Notfahrprogramms bei Ausfall des Kupplungspositionssensors ergibt.

Ausführungsbeispiele der Erfindung werden im folgenden anhand der Zeichnungen erläutert. Es zeigen:

Figur 1  einen Kraftfahrzeugantrieb mit einer automatisch betätigten Kupplung gemäß der Erfindung;

Figur 2  ein Blockschaltbild eines Kupplungsbetätigungssystems;

Figur 3  ein Streckenmodell einer Kupplungslagesteuerung;

Figur 4  eine modellhafte Darstellung eines Steuerungsalgorithmus der Kupplungslagesteuerung nach Figur 3;

Figur 5  eine modellhafte Darstellung der Strecke der Kupplungslagesteuerung nach Figur 3;

Figur 6  den Hydraulikölfluss in der Kupplungsbetätigung als Funktion von elektrischem Steuerstrom und Druckdifferenz;

Figur 7  den elektrischen Steuerstrom in der Kupplungbetätigung als inverse Funktion von Hydraulikölfluss und Druckdifferenz;

Figur 8  den zeitlichen Verlauf von Soll- und Istposition der Kupplung bei einer Kupplungslagesteuerung ohne Druckaufbauphase;

Figur 9  den zeitlichen Verlauf von Soll- und Istposition der Kupplung bei einer erfindungsgemäßen Kupplungslagesteuerung mit Druckaufbauphase, und

Figur 10  ein Ablaufdiagramm eines in dem Kupplungsbetätigungssystem nach Figur 2 abgearbeiteten Programms.

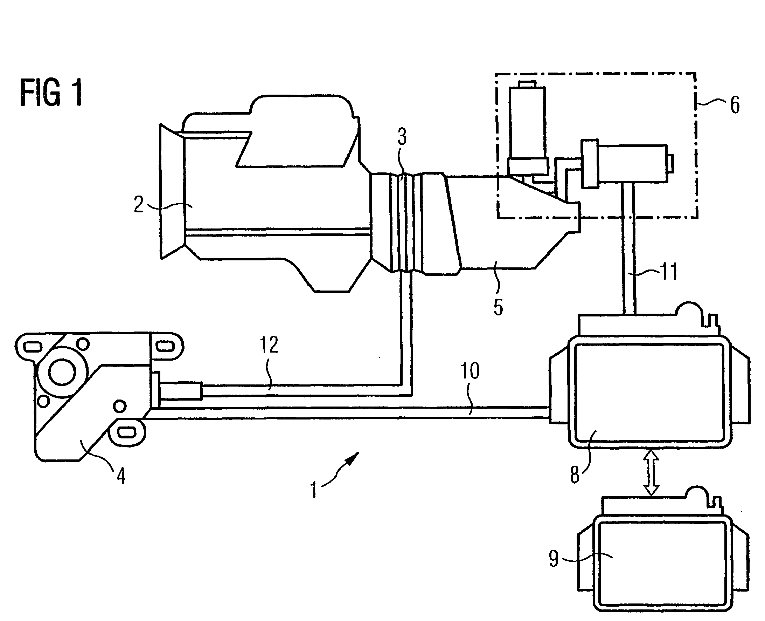

Ein Kraftfahrzeugantrieb 1 (Figur 1) weist - soweit er für die vorliegende Erfindung von Bedeutung ist - folgende Bestandteile auf: einen Motor 2, eine Kupplung 3, einen Kupplungsaktuator (im folgenden auch als Stellglied oder Stellantrieb für die Kupplung bezeichnet) 4, ein Schaltgetriebe 5, einen Getriebeaktuator 6, eine elektronische Steuerung 8 für das Stellglied 4 und den Getriebeaktuator 6 sowie eine Motorsteuerung 9. Die elektronische Steuerung 8 ist mit dem Stellglied 4 durch Steuer- und Signalleitungen 10 und mit dem Getriebeaktuator 6 durch Steuer- und Signalleitungen 11 verbunden.

Das Stellglied 4 kann als elektromotorisch angetriebener oder als hydraulisch angetriebener Aktuator ausgebildet sein. Im hier beschriebenen Ausführungsbeispiel wird ein hydraulisches Stellglied 4 verwendet, das mit der Kupplung 3 durch eine Kraftübertragungsanordnung 12 verbunden ist, die zum Beispiel als Druckleitung ausgebildet ist.

Bei dem Kraftfahrzeugantrieb 1 ist in dem vorliegenden Ausführungsbeispiel zwar das Schaltgetriebe 5 konstruktiv wie ein Handschaltgetriebe ausgebildet, die Schaltvorgänge werden aber automatisch durchgeführt und die Kupplung 3 wird - durch die elektronische Steuerung 8 gesteuert - betätigt, sobald die Steuerung einen Schaltvorgang einleitet. Ein solches Getriebe wird als automatisches (oder auch: automatisiertes) Handschaltgetriebe, abgekürzt ASG, bezeichnet. Die erfindungsgemäße Kupplungssteuerung kann auch mit automatisch gesteuerten Kupplungen (als EKS bezeichnet) für übliche Handschaltgetriebe verwendet werden, die betätigt werden, sobald der Fahrer an den Schalthebel greift, um einen Gangwechsel durchzuführen, oder aber mit vollautomatischen Schaltgetrieben, die allerdings in der Regel mit einer Nasskupplung oder einem Strömungswandler versehen sind.

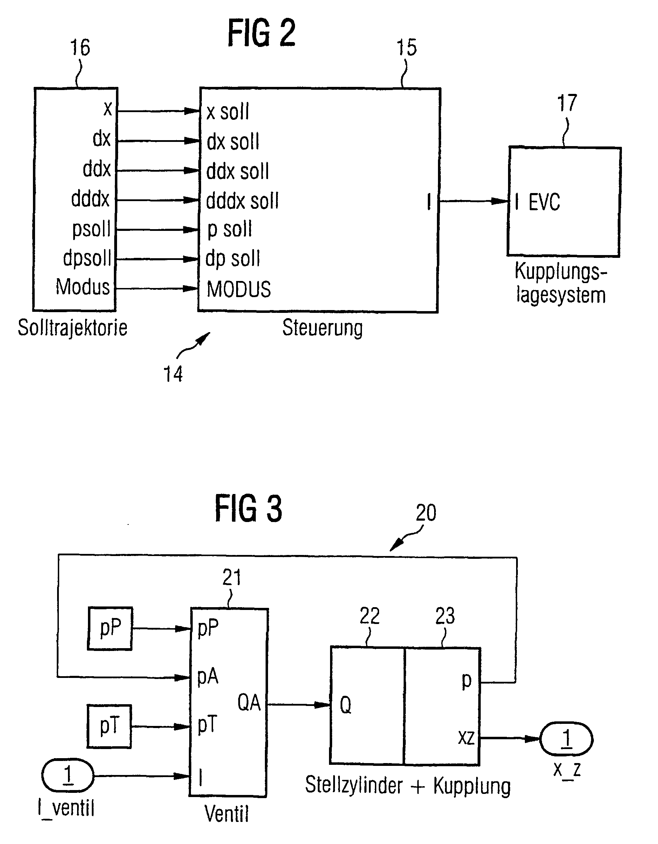

Das vereinfachte Blockschaltbild (Figur 2) eines nach dem erfindungsgemäßen Verfahren gesteuerten Kupplungsbetätigungssystems 14 weist auf eine elektronische Steuerung 15, der eine Reihe von Eingangsgrößen 16 zugeführt werden, die hier zusammenfassend als Solltrajektorien (oder auch: Sollverläufe) bezeichnet werden. Die Steuerung 15 erzeugt daraufhin an ihrem Signalausgang ein Stellsignal in Form eines Steuer- oder Spulenstroms $I$, der auf ein Kupplungslagesystem 17, das als elektromagnetisches Hydraulikventil EVC ausgebildet ist, gegeben wird.

Die Eingangsgrößen sind: die Solltrajektorie für die Position oder Lage $x_{soll}$ der Kupplung (sie entspricht auch der Position eines hier nicht dargestellten da bekannten Zentralausrückers der Kupplung) und die Solltrajektorie für den Druck $p_{soll}$ eines hydraulischen Kupplungsstellzylinders, mit dem die Kupplung betätigt wird und der ebenfalls, da er allgemein bekannt ist, hier nicht im einzelnen dargestellt ist. Außerdem sind Eingangsgrößen die erste bis dritte zeitliche Ableitung $dx_{soll}$, $ddx_{soll}$ und $dddx_{soll}$ der Kupplungsposition und die erste Ableitung $dp_{soll}$ des Solldrucks .

Zu Beginn eines Kupplungsvorgangs befindet sich der Kupplungsstellzylinder wegen der Vorspannung der Kupplungsfeder an einem Anschlag. Zunächst wird der Druck im Kupplungsstellzylinder gemäß der vorgegebenen Solltrajektorie gesteuert, so dass am Ende einer Druckaufbauphase die durch den Zylinderdruck erzeugte Kraft gleich der Federvorspannung ist. Die Solltrajektorie für den Druck $p_{soll}$ wird während der Druckaufbauphase zusammen mit der Ableitung $\dot{p}_{soll}$ und einem Signal Modus_1, das einen Betriebsmodus DRUCKAUFBAU anzeigt, der Steuerung 15 übergeben und durch einen noch zu beschreibenden Steuerungsalgorithmus verarbeitet.

Nach Beendigen der Druckaufbauphase werden die Solltrajektorie der Kupplungsposition $x_{soll}$ und ihre höheren Ableitungen zusammen mit einem Signal Modus_2 = KUPPLUNGSLAGE der Steuerung 15 zugeführt. Die Steuerung bestimmt daraus das Stellsignal $I$. In dem Modus_1 befindet sich also der Zylinder an dem Anschlag, es erfolgt eine Steuerung des Druckaufbaus. In dem Modus_2 ist der Zylinder in Bewegung, es erfolgt eine Steuerung der Kupplungslage.

Aus Figur 3 ist ein detaillierteres Streckenmodell 20, das heißt ein Modell des zu steuernden Kupplungslagesystems 17, ersichtlich. Ein hydraulisches Ventil 21 empfängt als Eingangsgrößen einen Systemdruck $P_P$, einen Arbeitsdruck $p_A$, einen Tankdruck $p_T$ und - über einen Signaleingang (1) - den Ventil- oder Spulenstrom $I_{ventil}$. Es steuert damit einen Volumenstrom Q, der in einem Stellzylinder 22 einen Druck aufbaut, welcher eine Kupplung 23 positioniert, das heißt in eine gewünschte Lage $x_z$ verbringt, die der Istposition der Strecke entspricht. Der in dem Stellzylinder 22 der Kupplung 23 aufgebaute Druck $p$ entspricht dem Arbeitsdruck $p_A$, er wirkt auch auf das Ventil 21 zurück.

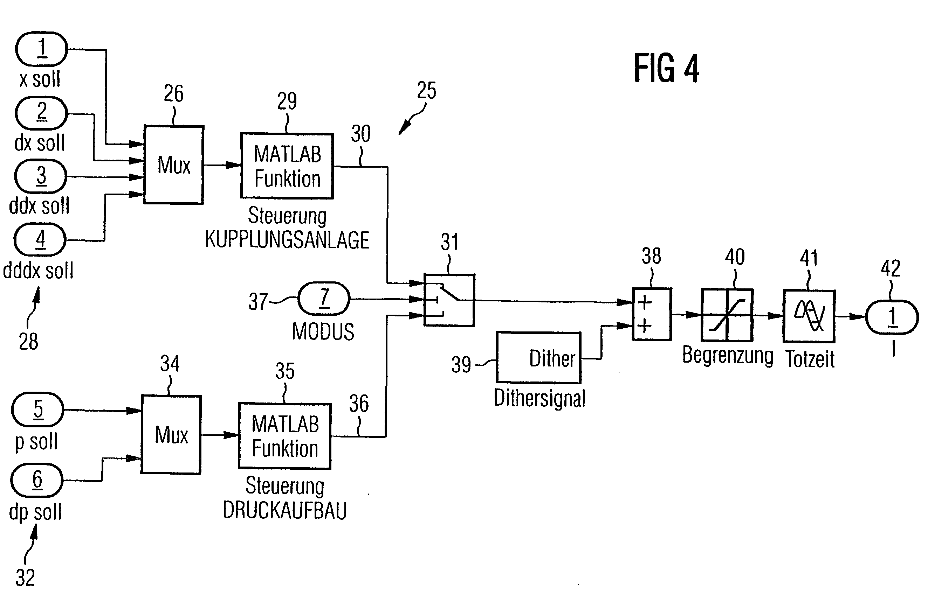

Bei dem aus Figur 4 ersichtlichen Strukturmodell eines Steuerungsalgorithmus 25 der Kupplungslagesteuerung werden einem ersten Multiplexer 26 über schematisch angedeutete Signaleingänge (1) bis (4) der Positionssollwert x_soll und dessen Ableitungen dx_soll, ddx_soll und dddx_soll eingegeben. In einem mit dem Ausgang des Multiplexers 26 verbundenen Programmblock Steuerung KUPPLUNGSLAGE 29 wird aus diesen Eingangssignalen ein Steuersignal 30, das die Kupplungslage festlegt, berechnet und an einen Umschalter 31 gelegt.

Über weitere Signaleingänge 32 mit den Bezeichnungen (5) und (6) werden einem zweiten Multiplexer 34 der Drucksollwert p_soll und dessen Ableitung dp_soll eingegeben. In einem mit dem Ausgang des Multiplexers 34 verbundenen Programmblock 35 Steuerung DRUCKAUFBAU wird aus diesen Eingangssignalen ein Steuersignal 36, das den Druckaufbau in dem Stellzylinder 22 steuert, berechnet und an den Umschalter 31 gelegt. In den Programmblöcken 29 und 35 sind Programme abgelegt, die mit einem im Handel unter der Bezeichnung MATLAB erhältlichen Programmentwicklungswerkzeug("Software tool") erstellt worden sind und mit denen die Kupplungslage beziehungsweise der Druckaufbau gesteuert werden.

Durch ein über einen Eingang (7) eingegebenes Betriebsmodus-Signal 37 schaltet der Umschalter 31 entweder das Signal 30 oder das Signal 36 auf seinen Ausgang durch. Dem jeweiligen Signal wird in einem Addierglied 38 ein Dither-Signal, das in einem Block 39 erzeugt wird, addiert, um Magnethysterese und Reibungseffekte im Ventil zu reduzieren. In einer Begrenzerschaltung wird die Signalamplitude beidseitig begrenzt und mit einem Zeitglied 41 wird eine durch die Funktionsauswertung verursachte Totzeit dargestellt. An einem Signalausgang 42 wird schließlich ein das Stellsignal darstellender Strom $I$ ausgegeben.

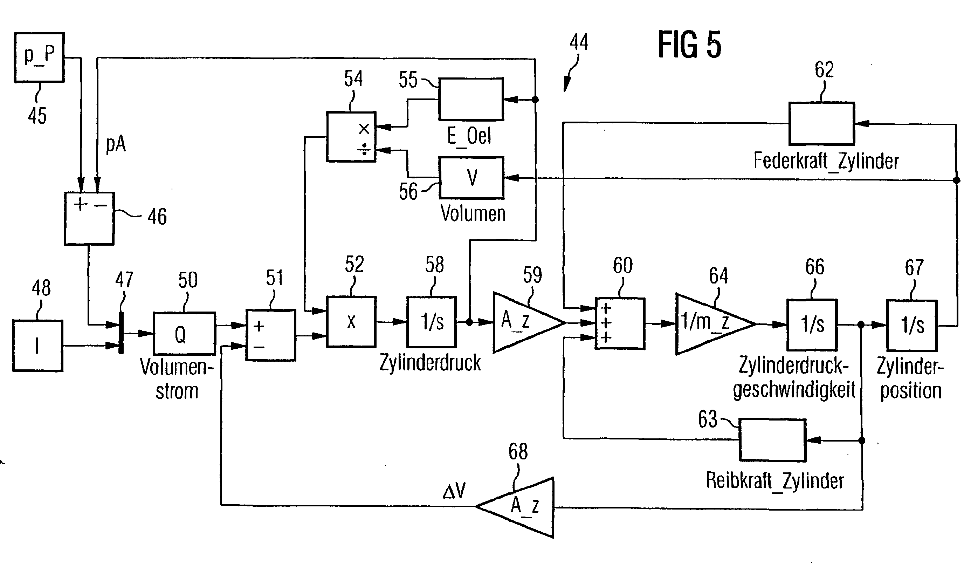

Das Streckenmodell 44 des Kupplungsbetätigungssystems ist in Figur 5 bei geöffnetem Steuerdurchlass P-A dargestellt. Es weist folgende Blöcke auf: einen Eingang 45, an dem der Systemdruck p_P anliegt (Anmerkung: die Größen pP, $p_P$ und p_P usw. sind gleichbedeutend, die unterschiedliche Schreibweise beruht auf unterschiedlichen Notationen in verschiedenen verwendeten Programmen) Von dort gelangt p_P zu dem Pluseingang eines Addierers 46, an dessen Minuseingang der Zylinder- oder Arbeitsdruck pA anliegt. Sein Ausgangssignal wird in einem Multiplexer 47 mit dem Spulenstrom $I$, der an einem Eingang 48 anliegt, zu einem Vektorsignal zusammengefasst.

Der Ausgang des Multiplexers 47 ist mit einem Block 50 verbunden, der den Volumenstrom $Q$ berechnet und ihn auf den Pluseingang eines Addierers 51 mit einem negierten Eingang gibt. Auf dessen negierten oder Minuseingang wird eine Volumenänderung $\Delta V$ gegeben und die sich ergebende Differenz wird in einem Multiplizierer 52 mit dem Ausgangssignal eines Dividiergliedes 54 multipliziert. Auf den Nennereingang des Dividierers 54 gelangt der Elastizitätsmodul E_Oel der Gesamtanordnung, einschließlich des Hydrauliköls, der in einem Block 55 abhängig von dem Zylinderdruck ermittelt wird. An den Zählereingang des Dividiergliedes 54 wird das in einem Block 56 abhängig von der Zylinderposition ermittelte Volumen V des hydraulischen Kupplungsbetätigungssystems einschließlich des Stell-Zylinders 22 gelegt.

In einem Integrierglied 58 wird aus dem Ausgangssignal des Multiplizierers 52 der Zylinderdruck berechnet und an den Minuseingang des Addierers 46 sowie an den Eingang eines als Multiplizierer dienenden Verstärkers 59 gelegt. In diesem wird er mit der wirksamen Zylinderfläche A multipliziert. Das Ergebnis gelangt an einen Eingang eines Addierers 60, an dessen zweiten Eingang die auf den Stellzylinder einwirkende Federkraft $F_{Feder}$ gelangt, die in einem Block 62 aus der Zylinderposition berechnet wird. An einen dritten Eingang des Addierers 60 wird die in dem Stellzylinder auftretende Reibkraft $F_{Reih}$ gelegt, die in einem Block 63 ermittelt wird.

Das Ausgangssignal des Addierers 60 gelangt zu einem Verstärker 64, und wird dort durch die bewegte Masse m_z dividiert. In einem Integrierglied 66 wird das Ergebnis der Division integriert und damit die Zylindergeschwindigkeit berechnet. Durch nochmalige Integration in einem Integrierglied 67 wird die Zylinderposition berechnet und auf den Eingang des Blocks 62 und des Blocks 56 gelegt. Die Zylindergeschwindigkeit wird einerseits auf den Eingang des Blocks 63 und andererseits an den Eingang eines Verstärkers 68 gelegt, in dem sie mit der wirksamen Zylinderfläche A_z multipliziert wird. Das Ergebnis der Multiplikation ist eine Volumenänderung $\Delta V$ im Zylinder, die auf einen Minuseingang des Addierers 51 gelegt wird.

Die Strecke 44 (Figur 5) der Kupplungsbetätigung lässt sich durch folgende drei Differentialgleichungen beschreiben:

$$\dot{x}_z = v_z \qquad\qquad\qquad (\mathrm{I})$$

$$\dot{v}_z = \frac{1}{m_z}(F^z{}_{Feder}(x_z) + A_z p + F^z{}_{Reih}(v)) \qquad (\mathrm{II})$$

$$\dot{p} = \frac{E_{\ddot{O}l}(p)}{V(x_z)}(Q(\Delta p, x_v) - A_z v_z) \qquad (\mathrm{III})$$

Darin sind:

$x_z$     die Position der Kupplung oder des Stellzylinders
$v_z$     die Geschwindigkeit der Kupplung oder des Stellzylinders
$m_z$    die bewegte Masse
$A_z$    die wirksame Fläche des Stellzylinders
$p$,     $\dot{p}$ der Druck im Stellzylinder und dessen Ableitung
$E_{\ddot{o}l}$    den druckabhängigen Elastizitätsmodul der Gesamtanordnung
$V$      das Volumen der Gesamtanordnung
$Q$     der Volumenstrom von Hydraulikflüssigkeit
$x_v$     die Position des Ventilschiebers und
$\Delta_p$    eine Druckdifferenz, die gegeben ist durch:

$$\Delta p = \begin{cases} p_P - p \text{ bei geöffnetem Steuerdurchlass P-A} \\ \\ p - p_T \text{ bei geöffnetem Steuerdurchlass A-T ,} \end{cases} \qquad (\mathrm{IV})$$

wobei A für den Arbeitsdruck und das mit ihm gefüllte Volumen, P für den Systemdruck und das mit ihm gefüllte Volumen und T für den (Vorrats-)Tank und den Druck in diesem stehen.

Der Volumenstrom $Q$ ist eine Funktion dieser Druckdifferenz und der Ventilschieberposition $x_v$.

Die Ventilschieberposition $x_v$ und die Ventilschiebergeschwindigkeit $v_v$ berechnen sich wie folgt

$$\dot{x}_v = v_v \qquad\qquad (V)$$

$$\dot{v}_v = \frac{1}{m_v}(F_{Magnet}(I,x_v) + F_{Feder}^v(x_v) + F_{Sir}(\Delta p, Q, x_v) + F_{Reib}^v(v_v)) \qquad (VI)$$

Für die tatsächliche Steuerung des Kupplungslagesystems wird das vereinfachte Streckenmodell 44 (Figur 5) verwendet. Dabei wird die hochfrequente Dynamik des Ventilschiebers vernachlässigt und die Ventilschieberposition durch eine algebraische Gleichung der Form

$$x_v^s = x_v^s(I, \Delta p, Q) \qquad\qquad (VII)$$

anstelle der Differentialgleichung (V) beschrieben. Damit ergibt sich der Volumenstrom $Q$ als Funktion des Spulenstroms I und des Differenzdrucks $\Delta p$:

$$Q = Q_s(I, \Delta P) \qquad\qquad (VIII)$$

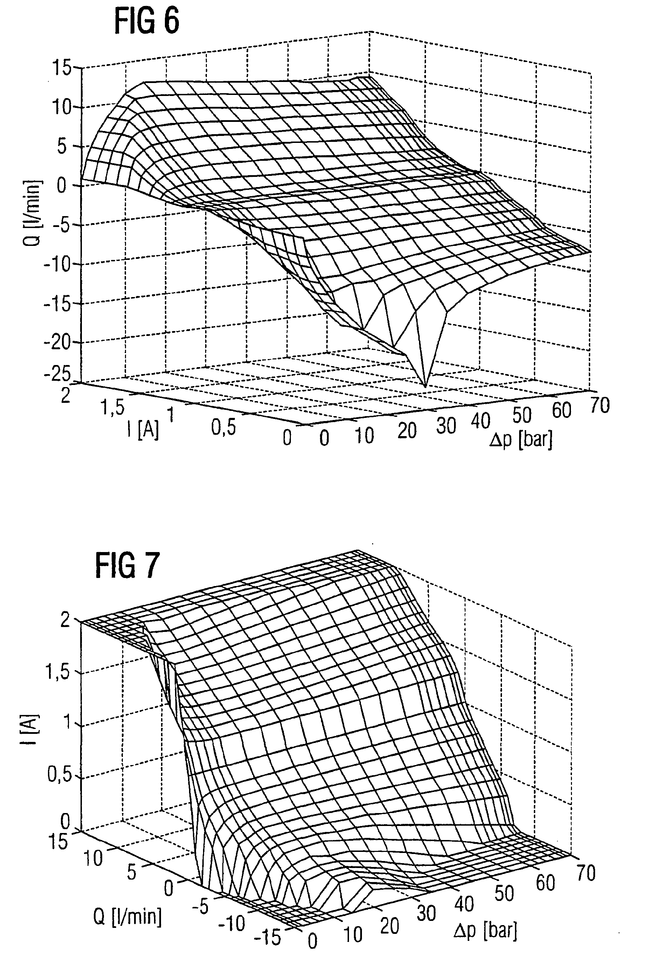

Diese Funktion, die den stationären Durchfluss Q in Abhängigkeit der beiden Größen $I$ und $\Delta p$ darstellt, wird numerisch ermittelt. Sie ist aus Figur 6 ersichtlich.
Es ergeben sich somit folgende Differentialgleichungen:

$$\dot{x}_z = v_z \qquad\qquad (IX)$$

$$\dot{v}_z = \frac{1}{m_z}(F_{Feder}^z(x_z) + A_z p + F_{Reib}^z(v_z)) \qquad (X)$$

$$\dot{p} = \frac{E_{Ol}(p)}{V(x_z)}(Q_s(I,\Delta p) - A_z v_z) \qquad (XI)$$

Eine Berechnung der einzelnen Blöcke von Figur 5 erfolgt in einem Ausführungsbeispiel gemäß nachstehender Gesetzmäßigkeiten.
Befindet sich der Stellzylinder am Anschlag, so gelten folgende Differentialgleichungen:

$$\dot{x}_z = 0 \qquad\qquad (VIIIa)$$

$$\dot{v}_z = 0 \qquad\qquad (IXa)$$

$$\dot{p} = \frac{E_{Ol}(p)}{V(x_z)} Q_s(I, \Delta p) \qquad\qquad (\text{Xa})$$

Die Kupplungslage wird, da die Strecke nichtlinear ist, nichtlinear wie folgt gesteuert. Um die Schreibweise zu vereinfachen werden die Indizes *z* (für Zylinder) und *Öl* im folgenden weg gelassen. Man erhält die Darstellung

$$\dot{x} = v \qquad\qquad (\text{XI})$$

$$\dot{v} = \frac{1}{m}\left(F_{Feder}(x) + Ap + F_{\text{Reib}}(v)\right) \qquad\qquad (\text{XII})$$

$$\dot{p} = \frac{E(p)}{V(x)}\left(Q_s(I, \Delta p) - Av\right) \qquad\qquad (\text{XIII})$$

worin $F_{Feder}$ die Federkraft und $F_{Reih}$ die Reibkraft im Kupplungssystem sind.
Mit *y*=x erhält man die Zustandsgrößen

$$x = y \qquad\qquad (\text{XIV})$$

$$v = \dot{y} \qquad\qquad (\text{XV})$$

$$p = \frac{1}{A}\left(m\ddot{y} - F_{Feder}(y) - F_{\text{Reib}}(\dot{y})\right) \qquad\qquad (\text{XVI})$$

Da der Volumenstrom $Q=Q_s(I,\Delta p)$ eine bezüglich *I* im interessierenden Definitionsbereich monoton steigende Funktion ist, existiert eine inverse Funktion $I = Q_s^{-1}(Q, \Delta p)$. Diese Funktion ist aus Figur 7 ersichtlich.

Die Eingangsgröße *I* lässt sich als Funktion der Ausgangsgröße *y* und deren zeitlichen Ableitungen darstellen

$$I = I(y, \dot{y}, \ddot{y}, \dddot{y}) \qquad\qquad (\text{XVII})$$

gemäß

$$I = Q_s^{-1}(Q_F, \Delta p) \qquad\qquad (\text{XVIII})$$

mit

$$Q_F = \frac{1}{A} \frac{V(y)}{E(\frac{1}{A}(m\ddot{y} - F_{Feder}(y) - F_{Reib}(\dot{y})))} (m\ddot{y} - \frac{\partial F_{Feder}(y)}{\partial y}\dot{y} - \frac{\partial F_{Reib}(\dot{y})}{\partial \dot{y}}\ddot{y}) + A\dot{y} \qquad (XIX)$$

und

$$\Delta p = p_P - \frac{1}{A}(m\ddot{y} - F_{Feder}(y) - F_{Reib}(\dot{y})) \quad \text{für} \quad Q_F \geq 0 \qquad (XXa)$$

sowie

$$\Delta p = \frac{1}{A}(m\ddot{y} - F_{Feder}(y) - F_{Reib}(\dot{y})) - p_T \quad \text{für} \quad Q_F < 0 \qquad (XXb)$$

Dieses Ergebnis wird für eine nichtlineare Steuerung der Kupplungsbetätigung mit einem Sollstrom $I_d$ verwendet:

$$I_d = I(y_d, \dot{y}_d, \ddot{y}_d, \dddot{y}_d) \qquad (XXI)$$

Um den Steueralgorithmus zu vereinfachen, können auch höhere Ableitungen in dieser Gleichung vernachlässigt werden, zum Beispiel wie folgt

$$I_d = I(y_d, \dot{y}_d, 0, 0) \qquad (XXII)$$

Der Druckaufbau in dem Stellzylinder 22 des Kupplungsbetätigungssystems wird wie folgt gesteuert.
Befindet sich der Stellzylinder an einem Anschlag, gilt für den Druck in ihm

$$\dot{p} = \frac{E(p)}{V} Q_s(I, \Delta p) \qquad (XXIII)$$

Hieraus ergibt sich:

$$Q_s(I, \Delta p) = \frac{V}{E(p)}\dot{p} \qquad (XXIV)$$

Durch Einsetzen der Sollwerte $p_d$ und $\dot{p}_d$ erhält man mit der inversen Funktion $Q_s^{-1}$ aus Figur 7 den Steuerstrom I

$$I = Q_s^{-1}(Q_{FD}, \Delta p) \qquad\qquad (\text{XXV})$$

mit der Volumenstromfunktion für den Druckaufbau:

$$Q_{FD} = \frac{V}{E(p_d)}\dot{p}_d \qquad\qquad (\text{XXVI})$$

Mit diesem Steuerstrom I wird der Arbeitsdruck $p_A$ im Stellzylinder gesteuert.

Die Steuerung der Kupplung erfolgt mit einer inversen Strecke, die durch Invertieren der anhand von Figur 5 dargestellten Strecke gewonnen wird.

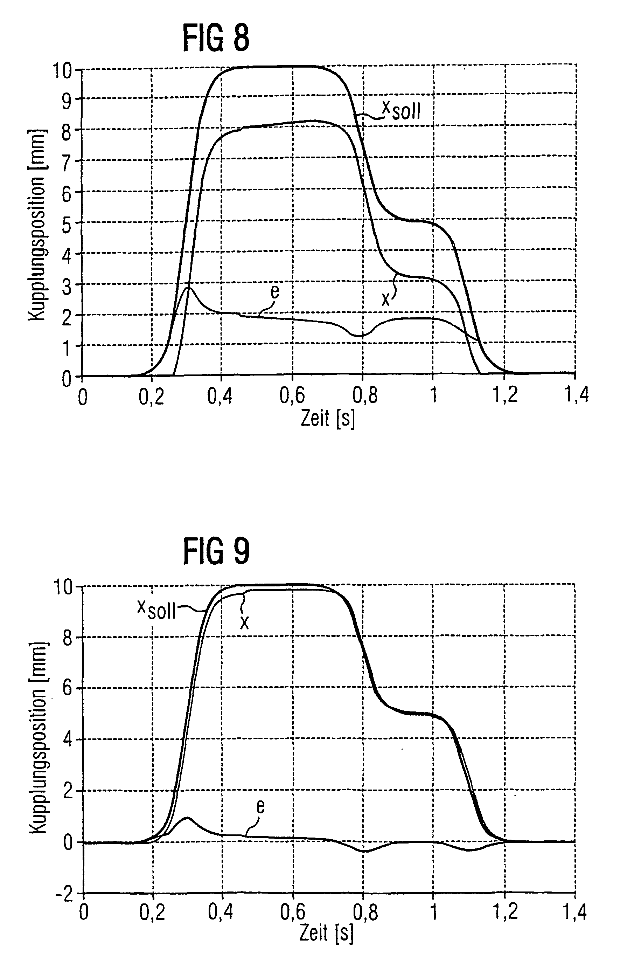

In Figur 8 sind der Sollwert $x_{soll}$ und der Istwert $x_z$ der Kupplungsposition bei einer Steuerung ohne eine Druckaufbauphase aufgetragen. Der Sollverlauf ist entsprechend einem typischen Kuppelvorgang vorgegeben. Außerdem ist der auftretende Fehler $e$ dargestellt. Bei dem Auskuppelvorgang (links in der Figur) beträgt der maximale Fehler $e$ etwa 3 mm, bei dem darauf folgenden Einkuppelvorgang (rechts) über 1 mm.

In Figur 9 sind der Sollwert $x_{soll}$ und der Istwert $x_z$ der Kupplungsposition bei einer erfindungsgemäßen Steuerung mit einer Druckaufbauphase von 0 sec bis 0,1 sec aufgetragen. Deutlich erkennbar ist der hier erheblich geringere Fehler $e$ von etwa 1 mm beim Auskuppeln und etwa 0,5 mm beim Einkuppeln. Dies stellt eine erheblich verbesserte Betätigung der Kupplung dar, die zu einem größeren Fahrkomfort und einem geringeren Verschleiß führt.

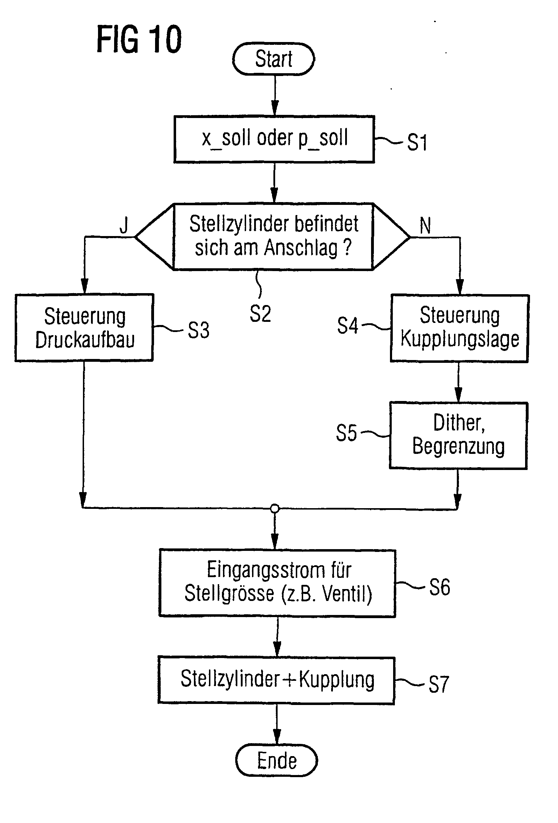

Ein aus Figur 10 ersichtliches Programm zum Steuern einer automatischen Kraftfahrzeugkupplung weist folgende Schritte auf:

**Start**: sobald von der elektronischen Steuerung 8 (Figur 1) ein Schaltvorgang eingeleitet wird, werden von ihr in einem Schritt

**S1**: eine Kupplungssollposistion x_soll beziehungsweise ein Solldruck p_soll vorgegeben. Dann erfolgt in einem Schritt

**S2**: eine Abfrage, ob der Stellzylinder der Kupplung an einem Anschlag anliegt. Falls ja, wird in einem Schritt

**S3**: eine Steuerung eines Druckaufbau in dem Stellzylinder 22 der Kupplung. Falls nein, erfolgt in einem Schritt

**S4**: eine Steuerung der Kupplungslage und danach in einem Schritt

**S5**: eine Aufschaltung eines Dither-Signals und eine Signalbegrenzung. Im Anschluss an **S4** oder **S5** wird in einem Schritt

**S6** eine Stellgröße zum Beispiel als Eingangsstrom für das Ventil 21 berechnet. Damit ist ein Abtastschritt des Kupplungsvorgangs erfolgreich beendet, ohne dass ein Signal eines Positionssensors ausgewertet worden wäre. Der Abtastschritt wird zyklisch wiederholt (zum Beispiel alle 4 ms). - Schließlich wird

**S7**: der Stellzylinder 22 betätigt und dabei die Kupplung 23 in Richtung ihrer Ausrückposition bewegt wird. Damit ist ein Betätigungsvorgang der Kupplung (etwa nach 30 ms) beendet.

**Patentansprüche**

1. Verfahren zum Steuern einer automatischen Kraftfahrzeugkupplung mit einem Stellglied zum Betätigen der Kupplung und einem elektromagnetisch betätigten Ventil, mit dessen Spulenstrom der Druck in dem Stellglied und damit die Position der Kupplung festgelegt wird,
**dadurch gekennzeichnet,**

- **dass** anhand eines regeltechnischen Modells einer zu steuernden nicht linearen Strecke ein inverses Streckenmodell erstellt wird, und
- **dass** mit dem inversen Streckenmodell der Spulenstrom des Ventils gesteuert wird.

2. Verfahren nach Anspruch 1, **dadurch gekennzeichnet, dass** bei an einem Anschlag anliegenden Stellzylinder für die Kupplung der Druck in diesem Stellzylinder aufgebaut und anhand eines ermittelten Druckwerts ein Steuersignal für die Position der Kupplung erzeugt wird.

3. Verfahren nach Anspruch 1, **dadurch gekennzeichnet, dass** der Druck in dem Stellglied gemäß einer vorgegebenen Solltrajektorie derart gesteuert wird, daß am Ende einer Druckaufbauphase die durch den Druck erzeugte Kraft gleich einer Federvorspannung ist, gegen die sich das Stellglied zu Beginn eines Kupplungsvorgangs an einem Anschlag befindet.

4. Verfahren nach Anspruch 3, **dadurch gekennzeichnet, dass** der als Stellsignal dienende Spulenstrom in einer Kupplungslagephase nach Beendigung der Druckaufbauphase aus einer Solltrajektorie der Position der Kupplung und deren zeitlichen Ableitungen berechnet wird.

5. Verfahren nach Anspruch 4, **dadurch gekennzeichnet, dass** durch ein den Betriebsmodus festlegendes Signal zwischen der Druckaufbauphase und der Kupplungslagephase umgeschaltet wird.

6. Verfahren nach Anspruch 4, **dadurch gekennzeichnet, dass** zu dem Stellsignal in der Druckaufbauphase und in der Kupplungslagephase ein Dither-Signal addiert wird, um eine Magnethysterese und Reibungseffekte im Ventil zu verringern.

7. Verfahren nach Anspruch 1, **dadurch gekennzeichnet, dass** ein Volumenstrom, durch den das Ventil betätigt wird, berechnet wird nach einer Beziehung $I = Q_s^{-1}(Q_F, \Delta p)$, wobei

$$Q_F = \frac{1}{A} \frac{V(y)}{E(\frac{1}{A}(m\ddot{y} - F_{Feder}(y) - F_{Reib}(\dot{y})))}(m\ddot{y} - \frac{\partial F_{Feder}(y)}{\partial y}\dot{y} - \frac{\partial F_{Reib}(\dot{y})}{\partial \dot{y}}\ddot{y}) + A\dot{y},$$

$$\Delta p = p_P - \frac{1}{A}(m\ddot{y} - F_{Feder}(y) - F_{Reib}(\dot{y})) \quad \text{für} \quad Q_F \geq 0$$

und

$$\Delta p = \frac{1}{A}(m\ddot{y} - F_{Feder}(y) - F_{Reib}(\dot{y})) - p_T \quad \text{für} \quad Q_F < 0$$

worin:

    $A$ die wirksame Fläche des Stellzylinders,
    E der Elastizitätsmodul der Gesamtanordnung, einschließlich des Hydrauliköls,
    m die bewegte Masse und
    $y$ die Ausgangsgröße der Steuerung, zum Beispiel die Kupplungsposition

sind.

8. Verfahren nach Anspruch 7, **dadurch gekennzeichnet, dass** der Steuerstrom ($I$) in der Druckaufbauphase nach der Beziehung $I = Q_s^{-1}(Q_{FD}, \Delta p)$ ermittelt wird, worin $Q_s^{-1}$ die inverse Funktion zu $Q_S$, und $\Delta p$ die Druckdifferenz zwischen dem Arbeits- und dem Systemdruck ist und ein Volumenstrom $Q_{FD}$ sich aus der Gleichung

$$Q_{FD} = \frac{V}{E(p_d)} \dot{p}_d \quad \text{ergibt.}$$

**Claims**

1.  Method for controlling an automatic motor vehicle clutch with an actuator to actuate the clutch and with an electromagnetically actuated valve, the coil current of which is used to determine the pressure in the actuator and thus the position of the clutch,
    **characterised in that**

    - an inverse system model is generated on the basis of a control model of a non-linear system to be controlled, and
    - the coil current of the valve is controlled using the inverse system model.

2.  Method in accordance with claim 1, **characterised in that** in the case of a control cylinder for the clutch, said control cylinder lying against a stop, the pressure in said control cylinder is built up and a control signal for the position of the clutch is generated on the basis of a determined pressure value.

3.  Method in accordance with claim 1, **characterised in that** the pressure in the actuator is controlled in accordance with a predefined target trajectory such that at the end of a pressure build-up phase the force generated by the pressure is equal to the initial stress of a spring, against which the actuator is located at a stop at the start of a clutch operation.

4.  Method in accordance with claim 3, **characterised in that** the coil current used as a control signal is calculated in a clutch position phase after completion of the pressure build-up phase from a target trajectory of the position of the clutch and its temporal derivations.

5.  Method in accordance with claim 4, **characterised in that** by means of a signal determining the operating mode a switch is effected between the pressure build-up phase and the clutch position phase.

6.  Method in accordance with claim 4, **characterised in that** a dither signal is added to the control signal in the pressure build-up phase and in the clutch position phase, in order to reduce magnetic hysteresis and friction effects in the valve.

7.  Method in accordance with claim 1, **characterised in that** a volumetric flow, by means of which the valve is actuated, is calculated in accordance with a relationship $I = Q_S^{-1}(Q_F, \Delta p)$, whereby

$$Q_F = \frac{1}{A} \frac{V(y)}{E(\frac{1}{A}(m\ddot{y} - F_{Feder}(y) - F_{Reib}(\dot{y})))} (m\dddot{y} - \frac{\partial F_{Feder}(y)}{\partial y}\dot{y} - \frac{\partial F_{Reib}(\dot{y})}{\partial \dot{y}}\ddot{y}) + A\dot{y}$$

$$\Delta p = p_P - \frac{1}{A}(m\ddot{y} - F_{Feder}(y) - F_{Reib}(\dot{y})) \quad \text{for } Q_F \geq 0$$

and

$$\Delta p = \frac{1}{A}(m\ddot{y} - F_{Feder}(y) - F_{Reib}(\dot{y})) - p_T \quad \text{for } Q_F < 0$$

where:

A is the effective area of the control cylinder,
E is the elasticity module of the entire arrangement, including the hydraulic oil,
m is the moving mass and
y is the output variable of the controller, for example the clutch position.

**8.** Method in accordance with claim 7, **characterised in that** the control current (I) is determined in the pressure build-up phase in accordance with the relationship $I = Q_S^{-1}(Q_{FD}, \Delta p)$, where $Q_S^{-1}$ is the inverse function to $Q_S$ and $\Delta p$ is the pressure difference between the operating pressure and the system pressure and a volumetric flow $Q_{FD}$ is obtained from the equation

$$Q_{FD} = \frac{V}{E(p_d)} \dot{p}_d \; .$$

**Revendications**

**1.** Procédé de commande d'un embrayage automatique de véhicule à moteur, comprenant un organe de commande pour actionner l'embrayage, et une soupape actionnée par voie électromagnétique dont le courant de bobine détermine la pression dans l'organe de commande et donc la position de l'embrayage,
**caractérisé en ce :**

qu'un modèle inverse de trajectoire est établi au moyen d'un modèle de la technique de régulation d'une trajectoire non linéaire à commander, et
**que** le courant de bobine de la soupape est commandé à l'aide du modèle inverse de trajectoire.

**2.** Procédé selon la revendication 1, **caractérisé en ce que** la pression est établie dans un cylindre de commande de l'embrayage lorsqu'il est à l'appui sur une butée, et un signal de commande pour la position de l'embrayage est généré à l'aide d'une valeur de pression déterminée.

**3.** Procédé selon la revendication 1, **caractérisé en ce que** la pression dans l'organe de commande est régulée selon une trajectoire de consigne de telle manière que la force générée par la pression est égale, à la fin d'une phase de montée en pression, à une précontrainte de ressort sur lequel l'organe de commande s'appuie au début d'un processus d'embrayage.

**4.** Procédé selon la revendication 3, **caractérisé en ce que** le courant de bobine servant de signal de commande est calculé dans une phase de position de l'embrayage, après la fin de la phase d'établissement de pression, à partir d'une trajectoire de consigne et ses dérivées temporelles.

**5.** Procédé selon la revendication 4, **caractérisé en ce qu'**un signal qui détermine le mode de fonctionnement, effectue une commutation entre la phase de montée en pression et la phase de position de l'embrayage.

**6.** Procédé selon la revendication 4, **caractérisé en ce qu'**un signal de tramage est additionné au signal de commande dans la phase de montée en pression, et un signal de tramage dans la phase de position de l'embrayage, afin de diminuer une hystérèse magnétique et des effets de friction.

**7.** Procédé selon la revendication 1, **caractérisé en ce qu'**un flux volumique par lequel la soupape est actionnée, est calculé selon une relation $I = Q_S^{-1}(Q_F, \Delta p)$, relation dans laquelle

$$Q_F = \frac{1}{A} \frac{V(y)}{E(\frac{1}{A}(m\ddot{y} - F_{Feder}(y) - F_{Reib}(\dot{y})))}(m\ddot{y} - \frac{\partial F_{Feder}(y)}{\partial y}\dot{y} - \frac{\partial F_{Reib}(\dot{y})}{\partial \dot{y}}\ddot{y}) + A\dot{y},$$

$$\Delta p = p_P - \frac{1}{A}(m\ddot{y} - F_{Feder}(y) - F_{Reib}(\dot{y})) \qquad \text{pour } Q_F \geq 0$$

et

$$\Delta p = \frac{1}{A}(m\ddot{y} - F_{Feder}(y) - F_{Reib}(\dot{y})) - p_T \qquad \text{pour } Q_F < 0,$$

formules dans lesquelles signifient :

$A$ la surface effective du cylindre de commande,
$E$ le module d'élasticité de l'installation globale, y compris l'huile hydraulique,
$m$ la masse en mouvement et
$y$ la grandeur de départ de la commande, par exemple la position de l'embrayage.

8. Procédé selon la revendication 7, **caractérisé en ce que** le courant de commande (I) est déterminé au cours de la phase de montée en pression selon la relation $I = Q_S^{-1}(Q_{FD}, \Delta p)$ dans laquelle $Q_S^{-1}$ est la fonction inverse de $Q_S$ et $\Delta p$ est la différence de pression entre la pression de travail et la pression de système, et qu'un flux volumique $Q_{FD}$ résulte de l'équation $Q_{FD} = \frac{V}{E(p_d)}\dot{p}_d$.

FIG 1

EP 1 319 138 B1

## FIG 2

16

**Solltrajektorie**

| | |
|---|---|
| x | |
| dx | |
| ddx | |
| dddx | |
| psoll | |
| dpsoll | |
| Modus | |

15

**Steuerung**

| | |
|---|---|
| x soll | |
| dx soll | |
| ddx soll | |
| dddx soll | |
| p soll | |
| dp soll | |
| MODUS | I |

14

17

I EVC

**Kupplungslagesystem**

## FIG 3

20

21

pP → pP

pA

pT → pT

1 → I

I_ventil

**Ventil**

QA →

22    23

Q    p

xz → 1

X_Z

**Stellzylinder + Kupplung**

**FIG 4**

EP 1 319 138 B1

FIG 5

EP 1 319 138 B1

## FIG 6

## FIG 7

## FIG 8

## FIG 9

**FIG 10**

```
                          ( Start )
                             │
                             ▼
              ┌──────────────────────────┐
              │    x_soll oder p_soll     │ ── S1
              └──────────────────────────┘
                             │
                             ▼
        J    ◁──────────────────────────▷    N
       ┌─────┤  Stellzylinder befindet  ├─────┐
       │     │    sich am Anschlag ?    │     │
       │      ◁──────────────────────────▷    │
       │                  │                   │
       ▼                 S2                   ▼
┌──────────────┐                    ┌──────────────────┐
│  Steuerung   │ ── S3      S4 ──   │    Steuerung     │
│ Druckaufbau  │                    │  Kupplungslage   │
└──────────────┘                    └──────────────────┘
       │                                      │
       │                                      ▼
       │                        S5 ── ┌──────────────────┐
       │                              │      Dither,      │
       │                              │    Begrenzung     │
       │                              └──────────────────┘
       │                                      │
       └─────────────────○────────────────────┘
                         │
                         ▼
              ┌──────────────────────────┐
              │     Eingangsstrom für     │ ── S6
              │  Stellgrösse (z.B. Ventil)│
              └──────────────────────────┘
                         │
                         ▼
              ┌──────────────────────────┐
              │  Stellzylinder + Kupplung │ ── S7
              └──────────────────────────┘
                         │
                         ▼
                      ( Ende )
```